# FASCICULE DE BREVET EUROPEEN

(11) **EP 3 234 938 B1**
(45) Date de publication et mention de la délivrance du brevet: **08.03.2023**
(21) Numéro de dépôt: 15830798.3
(22) Date de dépôt: 15.12.2015
(51) Int. Cl.: G08G 5/00, G01C 23/00, G08G 5/02

(54) **DISPOSITIF ET PROCÉDÉ D'AIDE AU PILOTAGE D'UN AÉRONEF LORS D'UNE PHASE D'ATTERRISSAGE**
VORRICHTUNG UND VERFAHREN ZUR UNTERSTÜTZUNG DES PILOTEN EINES FLUGZEUGS WÄHREND EINES LANDEPHASE
DEVICE AND METHOD FOR AIDING THE PILOTING OF AN AIRCRAFT DURING A LANDING PHASE

(30) Priorité: 16.12.2014 FR 1462557
(43) Date de publication de la demande: 25.10.2017
(73) Titulaire: Bull S.A.S., 78340 Les Clayes-sous-Bois (FR)
(72) Inventeur: MARTINEZ, Patrice, 38100 Grenoble (FR); ZENG EYINDANGA, Landry Stéphane, 38100 Grenoble (FR); CAYUELA, Jacques, 38700 la Tronche (FR)
(74) Mandataire: Argyma
(86) Numéro de dépôt international: PCT/FR2015/053499
(87) Numéro de publication internationale: WO 2016/097572

(56) Documents cités:
- EP-A1- 2 296 129
- EP-A1- 2 618 322
- EP-A2- 2 508 847
- EP-A2- 2 555 072
- EP-A2- 2 800 082
- WO-A2-2009/042309
- US-A1- 2007 171 094

## Description

La présente invention concerne un dispositif d'aide au pilotage d'un aéronef, par exemple un avion, lors d'une phase d'atterrissage. Elle concerne également un procédé et un programme d'ordinateur correspondants.

Il existe, en particulier dans les avions, des systèmes d'aide à l'atterrissage mis en oeuvre dans des dispositifs de pilotage automatique conçus pour agir en phase d'atterrissage. Mais ces systèmes supposent que la piste d'atterrissage est en bon état. Si ce n'est pas le cas, le pilote de l'avion doit reprendre la main sur son dispositif de pilotage automatique et décider lui-même si son train d'atterrissage est suffisamment solide pour supporter un atterrissage sur une piste difficile ou s'il doit renoncer à cet atterrissage.

Il existe aussi des trains d'atterrissage renforcés permettant de faire face à des situations difficiles dans lesquelles la piste d'atterrissage n'est pas en bon état. Mais ces trains d'atterrissage ne réagissent aux conditions difficiles qu'une fois que le contact est établi avec le sol et là encore le pilote de l'avion doit décider à l'avance s'il prend le risque d'atterrir ou pas.

Il existe enfin des systèmes de contrôle et de commande automatique des roues de trains d'atterrissage permettant une adaptation fine de ces trains d'atterrissage (moyens gyroscopiques, suspensions adaptatives, ...) au profil longitudinal et transversal de la piste. Mais là encore ces trains d'atterrissage ne s'adaptent aux conditions difficiles qu'une fois que le contact est établi avec le sol et le pilote de l'avion doit décider à l'avance s'il prend le risque d'atterrir ou pas.

Par conséquent, malgré tous ces outils d'aide au pilotage d'un aéronef en phase d'atterrissage, un atterrissage sur un site prédéterminé dont l'état s'avère finalement mauvais au moment d'engager cette phase, par exemple à cause de trous, bosses ou obstacles imprévus ou difficiles à détecter à l'oeil nu, reste potentiellement très dangereux et peut causer des dommages matériels voire même des pertes humaines.

Il peut ainsi être souhaité de prévoir un dispositif d'aide au pilotage d'un aéronef qui permette de s'affranchir d'au moins une partie des problèmes et contraintes précités.

Il est donc proposé un dispositif d'aide au pilotage d'un aéronef lors d'une phase d' atterrissage selon la revendication 1.

Ainsi, grâce à une opération de fusion de données exploitée pour anticiper l'arrivée de l'aéronef sur un site prédéterminé d'atterrissage, ces données étant à la fois issue d'une cartographie connue du site et de données obtenues par capteur(s) au moment de l'approche et donc en temps réel, il est possible d'anticiper l'état de ce site avec une meilleure fiabilité pour améliorer la prise de décision d'atterrir et/ou l'assistance au moins partiellement automatisée à l'atterrissage.

De façon optionnelle, l'élément d'aide anticipée à l'atterrissage comporte au moins l'un des éléments de l'ensemble constitué d'un écran d'affichage, d'un module de commande de suspensions adaptatives d'un train d'atterrissage de l'aéronef et d'un module de pilotage automatique en phase d'atterrissage de l'aéronef.

De façon optionnelle également, ledit au moins un capteur comporte au moins l'un des éléments de l'ensemble constitué d'un capteur photographique, d'un capteur vidéo, d'un capteur à ultrasons et d'un capteur infrarouge.

Il est en outre proposé un procédé d'aide au pilotage d'un aéronef lors d'une phase d'atterrissage selon la revendication 4.

De façon optionnelle, un procédé d'aide au pilotage d'un aéronef selon l'invention peut comporter une étape préalable de capture des données cartographiques du site prédéterminé d'atterrissage à l'aide d'un drone.

En variante, un procédé d'aide au pilotage d'un aéronef selon l'invention peut comporter une étape préalable de capture des données cartographiques du site prédéterminé d'atterrissage à l'aide de l'un des éléments de l'ensemble constitué d'un hélicoptère, d'un avion de reconnaissance, d'un opérateur humain, d'un ballon dirigeable et d'un satellite.

De façon optionnelle également, un procédé d'aide au pilotage d'un aéronef selon l'invention peut comporter une étape préalable de stockage des données cartographiques du site prédéterminé d'atterrissage dans un système de détection et de commandement aéroporté, et dans lequel le téléchargement des données cartographiques à bord de l'aéronef se fait par un canal de télécommunication crypté entre le système de détection et de commandement aéroporté et le dispositif embarqué à bord de l'aéronef.

En variante également, un procédé d'aide au pilotage d'un aéronef selon l'invention peut comporter une étape préalable de stockage des données cartographiques du site prédéterminé d'atterrissage dans un serveur de stockage au sol.

Enfin, il est proposé un programme d'ordinateur téléchargeable depuis un réseau de communication et/ou enregistré sur un support lisible par ordinateur et/ou exécutable par un processeur, comprenant des instructions pour l'exécution des étapes d'un procédé d'aide au pilotage d'un aéronef selon l'invention, lorsque ledit programme est exécuté sur un ordinateur.

L'invention sera mieux comprise à l'aide de la description qui va suivre, donnée uniquement à titre d'exemple et faite en se référant aux dessins annexés dans lesquels :
- la figure 1 illustre un contexte dans lequel un dispositif d'aide au pilotage selon l'invention est utilisé,
- la figure 2 représente schématiquement la structure générale d'un dispositif d'aide au pilotage selon un mode de réalisation de l'invention, et
- la figure 3 illustre les étapes successives d'un procédé d'aide au pilotage selon un mode de réalisation de l'invention, pouvant être mis en oeuvre par le dispositif d'aide au pilotage de la figure 2.

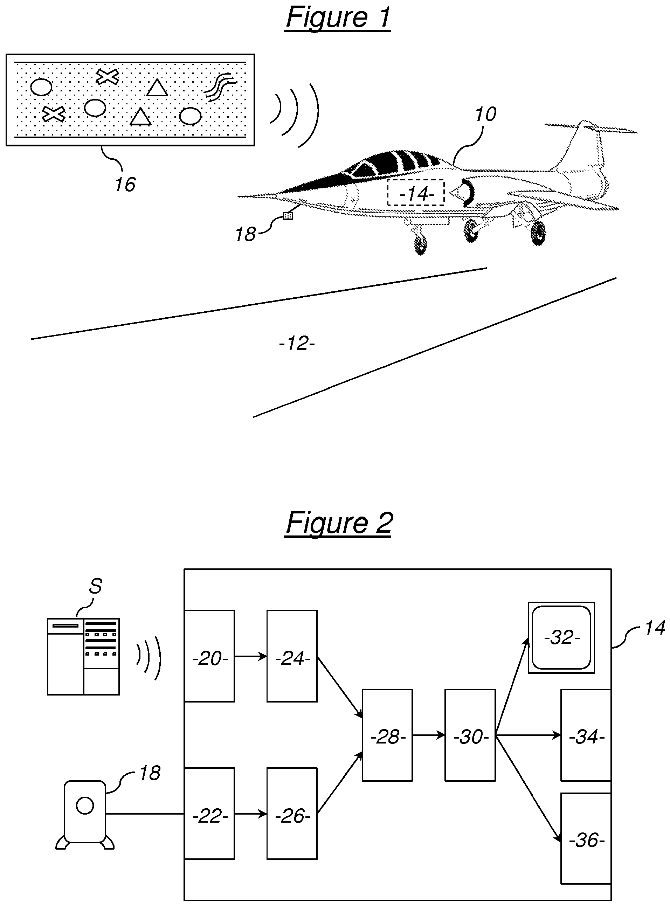

La figure 1 illustre un aéronef, en particulier un avion 10, en phase d'atterrissage sur un site prédéterminé, par exemple une piste d'atterrissage identifiée par la référence 12. Cet avion 10 est muni d'un dispositif d'aide au pilotage comportant une unité de calcul 14 embarquée apte à télécharger des données cartographiques 16 de la piste d'atterrissage 12. Le dispositif d'aide au pilotage comporte en outre au moins un capteur 18 de données supplémentaires de description de la piste d'atterrissage 12, ce capteur 18 étant disposé sur l'avion 10, par exemple à l'avant du cockpit et à l'extérieur, plus précisément sous le nez de l'avion 10 pour une meilleure visibilité de la piste d'atterrissage 12, de manière à pouvoir obtenir ces données supplémentaires de description lors d'une approche de la piste d'atterrissage 12 par l'avion 10.

Le capteur 18 est par exemple un capteur photographique capable de fournir au moins partiellement des prises de vue de la piste d'atterrissage 12 en temps réel au cours de la phase d'atterrissage de l'avion 10, depuis l'approche jusqu'à l'arrêt complet de l'avion 10. En variante, le capteur 18 pourrait être un capteur vidéo, un capteur à ultrasons, un capteur infrarouge ou tout autre capteur susceptible de fournir des données supplémentaires permettant d'enrichir les données cartographiques 16 de la piste d'atterrissage 12. En variante également, plusieurs capteurs pourraient être prévus dans le dispositif d'aide au pilotage.

En ce qui concerne les données cartographiques 16, elles comportent une représentation d'un état de la piste avec certaines de ses caractéristiques telles que des trous (représentés par des symboles ovales sur la figure 1), des bosses (représentées par des symboles triangles sur la figure 1), des obstacles (représentés par des symboles en croix sur la figure 1) ou des zones glissantes (représentées par des ondulations sur la figure 1).

Le dispositif de pilotage représenté sur la figure 2 comporte le capteur 18 et l'unité de calcul 14.

L'unité de calcul 14 peut par exemple être mise en oeuvre dans un dispositif informatique tel qu'un ordinateur de bord classique comportant un processeur associé à une ou plusieurs mémoires pour le stockage de fichiers de données et de programmes d'ordinateurs dont le processeur exécute les instructions.

Elle comporte une première interface 20 configurée pour télécharger les données cartographiques 16 à partir d'un serveur S.

Elle comporte une deuxième interface 22 configurée pour recevoir les données supplémentaires de description de la piste d'atterrissage 12, ces données supplémentaires étant fournies par le capteur 18.

Elle comporte en outre fonctionnellement quatre programmes d'ordinateurs ou quatre fonctions d'un même programme d'ordinateur 24, 26, 28, 30 exécutables par son processeur. On notera en effet que les programmes d'ordinateurs 24, 26, 28, 30 sont présentés comme distincts, mais cette distinction est purement fonctionnelle. Ils pourraient tout aussi bien être regroupés selon toutes les combinaisons possibles en un ou plusieurs logiciels. Leurs fonctions pourraient aussi être au moins en partie micro programmées ou micro câblées dans des circuits intégrés dédiés. Ainsi, en variante, le dispositif informatique mettant en oeuvre l'unité de calcul 14 pourrait être remplacé par un dispositif électronique composé uniquement de circuits numériques (sans programme d'ordinateur) pour la réalisation des mêmes actions.

Le premier programme d'ordinateur 24, optionnel, comporte des instructions pour la réalisation d'une fonction d'analyse spécifique des données cartographiques 16. Cette analyse peut comporter un filtrage, un rehaussement de contrastes, une détection de contours ou d'objets (par exemple des trous, bosses, obstacles, zones glissantes, etc.), ..., ou une combinaison de ces fonctions classiques de traitement de signaux.

Le deuxième programme d'ordinateur 26, optionnel, comporte des instructions pour la réalisation d'une fonction d'analyse spécifique des données supplémentaires de description de la piste d'atterrissage 12. Cette analyse peut comporter un filtrage, un rehaussement de contrastes, une détection de contours ou d'objets (par exemple des trous, bosses, obstacles, zones glissantes, etc.), ..., ou une combinaison de ces fonctions classiques de traitement de signaux.

Le troisième programme d'ordinateur 28 comporte des instructions pour la réalisation d'une opération de fusion algorithmique de données sur la base des données cartographiques 16 éventuellement analysées par le programme 24 et des données supplémentaires de description éventuellement analysées par le programme 26. Cette opération de fusion fait appel à des algorithmes connus de l'état de l'art et ne sera pas détaillée. Elle permet au programme 28 de fournir des données enrichies concernant la piste d'atterrissage 12.

Enfin, le quatrième programme d'ordinateur 30 comporte des instructions configurables pour la commande d'un élément d'aide anticipée à l'atterrissage de l'avion 10 par exploitation des données enrichies fournies par le programme 28. Cet élément d'aide anticipée à l'atterrissage comporte au moins l'un des éléments de l'ensemble constitué d'un écran d'affichage 32, d'un module 34 de commande de suspensions adaptatives d'un train d'atterrissage de l'avion 10 et d'un module 36 de pilotage automatique en phase d'atterrissage de l'avion 10.

L'écran d'affichage 32 permet a *minima* l'affichage d'une représentation de la piste d'atterrissage 12 à l'aide des données enrichies fournies par le programme 28, selon un premier niveau d'aide à l'atterrissage que l'on peut qualifier de mode manuel. En effet, selon ce premier niveau d'aide, un pilote de l'avion 10 gère lui-même l'atterrissage de façon entièrement manuelle, mais en connaissance de cause grâce à la représentation précise de la piste d'atterrissage 12 et de tous ses défauts affichée sur l'écran 32.

Le module 34 de commande des suspensions adaptatives, par exemple semi-actives ou actives, du train d'atterrissage de l'avion 10 permet d'exploiter les données enrichies fournies par le programme 28 pour anticiper l'adaptation automatique de ces suspensions aux aléas de la piste d'atterrissage 12, selon un deuxième niveau d'aide à l'atterrissage que l'on peut qualifier de mode semi-automatique. En effet, selon ce deuxième niveau d'aide, les suspensions adaptatives sont pilotées de façon automatique tout au long de la phase d'atterrissage pour éviter les petits obstacles mais le pilote de l'avion 10 gère lui-même l'évitement des plus gros obstacles.

Enfin, le module 36 de pilotage automatique en phase d'atterrissage permet d'exploiter les données enrichies fournies par le programme 28 pour anticiper l'exécution du pilotage automatique de l'avion 10, selon un troisième niveau d'aide à l'atterrissage que l'on peut qualifier de mode automatique. En effet, selon ce troisième niveau d'aide, le pilote de l'avion 10 n'a pas besoin d'intervenir puisque l'atterrissage, depuis la phase d'approche jusqu'à la prise de contact avec la piste 12 en évitant les obstacles et le roulage sur cette piste jusqu'à l'arrêt complet de l'avion 10, est automatiquement contrôlé et guidé. On notera en particulier que le pilotage automatique de l'avion 10 peut comporter un élément de contrôle de l'orientation des roues du train d'atterrissage, cet élément de contrôle exploitant lui aussi les données enrichies fournies par le programme 28.

Les trois niveaux d'aide précités ne s'excluent pas mutuellement et peuvent se combiner.

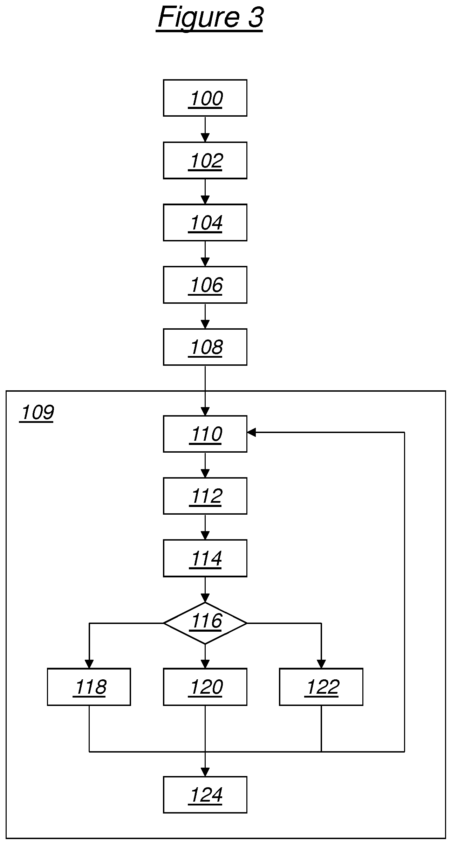

Le fonctionnement du dispositif d'aide au pilotage de la figure 2 va maintenant être détaillé en référence à la figure 3.

Au cours d'une première étape préalable 100 de capture des données cartographiques 16 de la piste d'atterrissage 12, un relevé de la piste d'atterrissage 12 est effectué indépendamment du dispositif d'aide au pilotage selon l'invention. Ce relevé peut être réalisé, selon le contexte, à l'aide d'un drone, hélicoptère, avion de reconnaissance, opérateur humain, ballon dirigeable, satellite ou tout autre moyen approprié. Il permet par exemple de construire une image numérique de la piste d'atterrissage 12.

Au cours d'une deuxième étape préalable 102, les données cartographiques 16 sont stockées sur le serveur S. Selon le contexte, ce serveur S peut être localisé dans un centre de stockage classique au sol ou embarqué dans un système de détection et de commandement aéroporté de type AWACS (de l'anglais « Airborne Warning And Control System »).

Au cours d'une troisième étape préalable 104 de configuration, les différents éléments fonctionnels du dispositif d'aide au pilotage selon l'invention sont configurés ou paramétrés par un technicien de préparation de vol ou par le pilote de l'avion 10. Cette étape consiste entre autre par exemple à choisir quel(s) niveau(x) d'aide est(sont) souhaité(s) parmi les niveaux définis précédemment, quel capteur(s) est(sont) activé(s) sur l'avion 10 pour l'obtention des données supplémentaires de description et comment sont paramétrés, pour une utilisation particulière :
- les interfaces 20, 22,
- les différents programmes d'ordinateurs 24, 26, 28, 30,
- l'écran d'affichage 32, et
- les modules 34, 36.

Au cours d'une étape de téléchargement 106, les données cartographiques 16 sont téléchargées par le processeur de l'unité de calcul 14 via l'interface 20. Ce téléchargement peut se faire par un canal de télécommunication crypté entre le serveur S et l'unité de calcul 14, surtout lorsque l'application envisagée est de nature militaire et que le serveur S est un AWACS.

Au cours d'une étape optionnelle d'analyse 108, les données cartographiques 16 sont analysées par exécution du programme d'ordinateur 24, si cela n'a pas déjà été fait en amont, de manière par exemple à identifier certains défauts de la piste d'atterrissage 12 détectable sur les données cartographiques 16.

Au cours d'une étape 109, l'avion 10 entre en phase d'atterrissage, cette phase d'atterrissage incluant l'approche de la piste 12, une prise de contact avec le sol et un roulage de l'avion 10 jusqu'à son arrêt complet et sécurisé.

Pendant cette phase d'atterrissage 109, au cours d'une étape 110 d'obtention, à l'aide du capteur 18, des données supplémentaires de description de la piste d'atterrissage 12, ces données commencent à être relevées alors que l'avion 10 est à l'approche de la piste 12 en vue de l'atterrissage effectif (i.e. le contact au sol). Elles sont reçues de façon connue en soi par l'unité de calcul 14 via l'interface 22. Leur réception peut se prolonger par mises à jours successives tout au long de la phase d'atterrissage jusqu'à l'arrêt complet de l'avion 10.

Au cours d'une étape optionnelle d'analyse 112, les données supplémentaires de description sont analysées par exécution du programme d'ordinateur 26, de manière par exemple à identifier certains autres défauts de la piste d'atterrissage 12 non détectables sur les données cartographiques 16.

Au cours d'une étape suivante de fusion 114, le processeur de l'unité de calcul 14 exécute les instructions du programme d'ordinateur 28 pour fusionner algorithmiquement les données cartographiques, éventuellement analysées par le programme 24, avec les données supplémentaires de description, également éventuellement analysées par le programme 26, de manière à fournir des données enrichies de la piste d'atterrissage 12 permettant de fournir une connaissance de son état réel. Cette étape de fusion peut elle aussi inclure une analyse, par traitement de signal, des données enrichies.

Au cours d'une étape suivante de sélection 116, le processeur de l'unité de calcul 14 exécute les instructions du programme d'ordinateur 30 de manière à activer l'un ou plusieurs des éléments 32 (écran d'affichage), 34 (module de commande des suspensions adaptatives) et 36 (module de pilotage automatique en phase d'atterrissage) en exploitant les données enrichies fournies à l'étape 114. Cette activation se fait au moins une fois de manière anticipée, c'est-à-dire avant l'atterrissage effectif proprement dit de l'avion 10.

Au cours d'étapes 118, 120 et 122 d'aide anticipée à l'atterrissage, et en fonction des activations lancées à l'étape 116, les actions suivantes sont sélectivement exécutées :
- un affichage anticipé d'une représentation améliorée de la piste d'atterrissage 12 par exploitation des données enrichies fournies à l'étape 114 (étape 118),
- une commande au moins semi-automatique anticipée des suspensions adaptatives du train d'atterrissage de l'avion 10 par exploitation des données enrichies fournies à l'étape 114 (étape 120), et
- une exécution anticipée du pilotage au moins semi-automatique de l'avion 10 par exploitation des données enrichies fournies à l'étape 114 (étape 122).

Enfin, au cours d'une étape 124, la fin de l'atterrissage 109 est atteinte par une immobilisation sécurisée de l'avion 10. Pendant toute la phase d'atterrissage 109 et jusqu'à l'arrêt complet 124 de l'avion 10, les étapes 110 à 122 peuvent se répéter en boucle pour une mise à jour permanente des données enrichies exploitées par les éléments 32, 34, 36.

En ce qui concerne l'ordre d'exécution des étapes détaillées précédemment, une certaine liberté est permise, sous réserve que les contraintes suivantes soient respectées :
- l'étape 100 doit bien sûr précéder l'étape 102,
- l'étape 102 doit précéder l'étape 106,
- les étapes 106 et 110 doivent précéder l'étape 114,
- l'étape 116 doit précéder les étapes 118, 120 et 122, et
- toutes les étapes 100 à 122 doivent au moins une fois précéder l'atterrissage effectif de l'avion 10 par prise de contact avec le sol, les étapes 110 à 122 pouvant par ailleurs être répétées tout au long de l'étape 109.

Il apparaît clairement qu'un dispositif d'aide au pilotage en phase d'atterrissage tel que celui décrit précédemment permet d'améliorer la sécurité d'un atterrissage en fournissant une analyse fine et anticipée, par fusion de données, de la zone d'atterrissage. En pratique, une visibilité de 400 mètres étant requise pour procéder à un atterrissage, le dispositif détaillé précédemment permet non seulement de l'obtenir mais en outre d'assister au moins partiellement le pilote pendant toute la phase d'atterrissage, de l'approche jusqu'à l'arrêt.

Des applications civiles peuvent être envisagées, dans lesquelles l'aéronef 10 peut être un avion de ligne ou cargo quelconque, disposant d'au moins une partie des éléments 32, 34, 36, et le serveur S au sol est par exemple localisé dans la tour de contrôle ou même sur un site distant.

Des applications militaires peuvent aussi être envisagées, notamment en zones de combats pour lesquelles les données cartographiques peuvent être rapidement rendues obsolètes par des bombardements de la piste 12. Dans ce cas, le relevé des données cartographiques est avantageusement réalisé par un drone, le stockage de ces données est avantageusement situé dans un serveur S embarqué dans un AWACS et l'aéronef est avantageusement un avion de chasse disposant d'au moins une partie des éléments 32, 34, 36.

On notera par ailleurs que l'invention est définie par les revendications indépendantes et n'est donc pas limitée au mode de réalisation et applications décrits précédemment. Il apparaîtra en effet à l'homme de l'art que diverses modifications peuvent être apportées au mode de réalisation décrit ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Dispositif d'aide au pilotage d'un aéronef (10) lors d'une phase d'atterrissage, comportant :
- une interface (20) de téléchargement de données cartographiques (16) d'un site prédéterminé d'atterrissage (12),
- au moins un capteur (18) de données supplémentaires de description du site prédéterminé d'atterrissage (12), ce capteur (18) étant disposé sur l'aéronef (10) de manière à pouvoir obtenir lesdites données supplémentaires de description lors d'une approche dudit site prédéterminé (12) par l'aéronef (10) en vue d'un atterrissage,
- un processeur (14, 28) de fusion algorithmique desdites données cartographiques (16) et desdites données supplémentaires de description pour fournir des données enrichies du site prédéterminé d'atterrissage (12), et
- un élément (32, 34, 36) d'aide avant l'atterrissage effectif de l'aéronef (10) par exploitation desdites données enrichies,
**caractérisé en ce qu'**au moins une commande (30) de l'élément (32, 34, 36) d'aide avant l'atterrissage effectif est prévue pour activer sélectivement chacun des modes suivants :
- un mode manuel comportant l'affichage, sur un écran (32) de contrôle d'un tableau de bord de l'aéronef (10), d'une cartographie améliorée du site prédéterminé d'atterrissage (12) à l'aide des données enrichies,
- un mode semi-automatique comportant un contrôle (34) de suspensions adaptatives d'un train d'atterrissage de l'aéronef (10) à l'aide des données enrichies, et
- un mode automatique comportant un contrôle (36) d'un module de pilotage automatique en phase d'atterrissage de l'aéronef (10) à l'aide des données enrichies.

2. Dispositif d'aide au pilotage d'un aéronef (10) selon la revendication 1, dans lequel le module de pilotage automatique (36) comporte un élément de contrôle de l'orientation des roues du train d'atterrissage, cet élément de contrôle exploitant lui aussi les données enrichies.

3. Dispositif d'aide au pilotage d'un aéronef (10) selon l'une quelconque des revendications 1 à 2, dans lequel ledit au moins un capteur (18) comporte au moins l'un des éléments de l'ensemble constitué d'un capteur photographique, d'un capteur vidéo, d'un capteur à ultrasons et d'un capteur infrarouge.

4. Procédé d'aide au pilotage d'un aéronef (10) lors d'une phase d'atterrissage, comportant les étapes suivantes :
- téléchargement (106), par un dispositif (14) embarqué à bord de l'aéronef (10) et par l'intermédiaire d'une première interface (20), de données cartographiques (16) d'un site prédéterminé d'atterrissage (12) stockées sur un serveur (S),
- obtention (110), à l'aide d'au moins un capteur (18) disposé sur l'aéronef (10), de données supplémentaires de description du site prédéterminé d'atterrissage (12) lors d'une approche dudit site prédéterminé (12) par l'aéronef (10) en vue d'un atterrissage,
- fusion algorithmique (114), par un processeur (14, 28) du dispositif embarqué (14), desdites données cartographiques (16) et desdites données supplémentaires de description pour fournir des données enrichies du site prédéterminé d'atterrissage (12), et
- aide (118, 120, 122) avant l'atterrissage effectif de l'aéronef (10) par exploitation desdites données enrichies,
**caractérisé en ce que** l'aide avant l'atterrissage effectif comporte l'activation sélective des modes suivants :
- un mode manuel comportant l'affichage, sur un écran (32) de contrôle d'un tableau de bord de l'aéronef (10), d'une cartographie améliorée du site prédéterminé d'atterrissage (12) à l'aide des données enrichies,
- un mode semi-automatique comportant un contrôle (34) de suspensions adaptatives d'un train d'atterrissage de l'aéronef (10) à l'aide des données enrichies, et
- un mode automatique comportant un contrôle (36) d'un module de pilotage automatique en phase d'atterrissage de l'aéronef (10) à l'aide des données enrichies.

5. Procédé d'aide au pilotage d'un aéronef (10) selon la revendication 4, comportant une étape préalable (100) de capture des données cartographiques (16) du site prédéterminé d'atterrissage (12) à l'aide d'un drone.

6. Procédé d'aide au pilotage d'un aéronef (10) selon la revendication 4, comportant une étape préalable (100) de capture des données cartographiques (16) du site prédéterminé d'atterrissage (12) à l'aide de l'un des éléments de l'ensemble constitué d'un hélicoptère, d'un avion de reconnaissance, d'un opérateur humain, d'un ballon dirigeable et d'un satellite.

7. Procédé d'aide au pilotage d'un aéronef (10) selon l'une quelconque des revendications 4 à 6, comportant une étape préalable (102) de stockage des données cartographiques (16) du site prédéterminé d'atterrissage (12) dans un système (S) de détection et de commandement aéroporté, et dans lequel le téléchargement (106) des données cartographiques (16) à bord de l'aéronef (10) se fait par un canal de télécommunication crypté entre le système de détection et de commandement aéroporté (S) et le dispositif (14) embarqué à bord de l'aéronef (10).

8. Procédé d'aide au pilotage d'un aéronef (10) selon l'une quelconque des revendications 4 à 6, comportant une étape préalable (102) de stockage des données cartographiques (16) du site prédéterminé d'atterrissage (12) dans un serveur (S) de stockage au sol.

9. Programme d'ordinateur téléchargeable depuis un réseau de communication et/ou enregistré sur un support lisible par ordinateur et/ou exécutable par un processeur, **caractérisé en ce qu'**il comprend des instructions pour l'exécution des étapes d'un procédé d'aide au pilotage d'un aéronef (10) selon l'une quelconque des revendications 4 à 8, lorsque ledit programme est exécuté sur un ordinateur (14).

## Patentansprüche

1. Vorrichtung zur Unterstützung des Piloten eines Flugzeugs (10) während einer Landephase, umfassend:
- eine Schnittstelle (20) zum Herunterladen von kartografischen Daten (16) eines vorbestimmten Landegebiets (12),
- mindestens einen Sensor (18) für zusätzliche Beschreibungsdaten des vorbestimmten Landegebiets (12), wobei der Sensor (18) auf dem Flugzeug (10) derart angeordnet ist, dass er die zusätzlichen Beschreibungsdaten während einer Annäherung des vorbestimmten Gebiets (12) durch das Flugzeug (10) aufgrund einer Landung erhalten kann,
- einen Prozessor (14, 28) der algorithmischen Zusammenführung der kartografischen Daten (16) und der zusätzlichen Beschreibungsdaten, um umfangreiche Daten des vorbestimmten Landegebiets (12) bereitzustellen, und
- ein Unterstützungselement (32, 34, 36) vor der tatsächlichen Landung des Flugzeugs (10) durch Auswertung der umfangreichen Daten,
**dadurch gekennzeichnet, dass** mindestens ein Befehl (30) des Unterstützungselements (32, 34, 36) vor der tatsächlichen Landung vorgesehen ist, um selektiv jeden der folgenden Modi zu aktivieren:
- einen manuellen Modus, der die Anzeige auf einem Kontrollbildschirm (32) eines Armaturenbretts des Flugzeugs (10) mit verbesserter Kartografie des vorbestimmten Landegebiets (12) mit Hilfe der umfangreichen Daten umfasst,
- einen halbautomatischen Modus, der eine Überwachung (34) der adaptiven Aufhängungen eines Fahrwerks des Flugzeugs (10) mit Hilfe der umfangreichen Daten umfasst, und
- einen automatischen Modus, der eine Überwachung (36) eines Autopilot-Moduls während der Landung des Flugzeugs (10) mit Hilfe der umfangreichen Daten umfasst.

2. Vorrichtung zur Unterstützung des Piloten eines Flugzeugs (10) nach Anspruch 1, wobei das Autopilot-Modul (36) ein Überwachungselement für die Ausrichtung der Räder des Fahrwerks umfasst, wobei dieses Überwachungselement ebenfalls die umfangreichen Daten verwendet.

3. Vorrichtung zur Unterstützung des Piloten eines Flugzeugs (10) nach einem der Ansprüche 1 bis 2, wobei der mindestens eine Sensor (18) mindestens einen aus der Gesamtheit der Elemente bestehend aus einem Bildsensor, einem Videosensor, einem Ultraschallsensor und einem Infrarotsensor umfasst.

4. Verfahren zur Unterstützung des Piloten eines Flugzeugs (10) während einer Landephase, umfassend die folgenden Schritte:
- Herunterladen (106), durch eine an Bord des Flugzeugs (10) befindliche Vorrichtung (14) und durch Zwischenschalten einer ersten Schnittstelle (20), von kartografischen Daten (16) eines vorbestimmten Landegebiets (12), die auf einem Server (S) gespeichert sind,
- Erhalten (110), mit Hilfe von mindestens einem auf dem Flugzeug (10) angeordneten Sensor (18), der zusätzlichen Beschreibungsdaten des vorbestimmten Landegebiets (12) während einer Annäherung des vorbestimmten Gebiets (12) durch das Flugzeug (10) aufgrund einer Landung,
- algorithmisches Zusammenführen (114), durch einen Prozessor (14, 28) der eingebauten Vorrichtung (14), der kartografischen Daten (16) und der zusätzlichen Beschreibungsdaten, um umfangreiche Daten des vorbestimmten Landegebiets (12) bereitzustellen, und
- Unterstützen (118, 120, 122) vor der tatsächlichen Landung des Flugzeugs (10) durch Verwertung der umfangreichen Daten,
**dadurch gekennzeichnet, dass** das Unterstützen vor der tatsächlichen Landung die selektive Aktivierung der folgenden Modi umfasst:
- eines manuellen Modus, der die Anzeige auf einem Kontrollbildschirm (32) eines Armaturenbretts eines Flugzeugs (10) mit verbesserter Kartografie des vorbestimmten Landegebiets (12) mit Hilfe der umfangreichen Daten umfasst,
- eines halbautomatischen Modus, der die Überwachung (34) der adaptiven Aufhängung eines Fahrwerks des Flugzeugs (10) mit Hilfe der umfangreichen Daten umfasst, und
- eines automatischen Modus, der die Überwachung (36) eines Autopilot-Moduls während der Landung des Flugzeugs (10) mit Hilfe der umfangreichen Daten umfasst.

5. Verfahren zum Unterstützen des Piloten eines Flugzeugs (10) nach Anspruch 4, umfassend einen vorausgehenden Schritt (100) der Erfassung der kartografischen Daten (16) des vorbestimmten Landegebiets (12) mit Hilfe einer Drone.

6. Verfahren zum Unterstützen des Piloten eines Flugzeugs (10) nach Anspruch 4, umfassend einen vorausgehenden Schritt (100) der Erfassung der kartografischen Daten (16) des vorbestimmten Landegebiets (12) mit Hilfe eines aus der Gesamtheit der Elemente bestehend aus einem Hellikopter, einem Aufklärungsflugzeug, einem menschlichen Bediener, einem Luftschiff und einem Satelliten.

7. Verfahren zum Unterstützen des Piloten eines Flugzeugs (10) nach einem der Ansprüche 4 bis 6, umfassend einen vorausgehenden Schritt (102) der Speicherung der kartografischen Daten (16) des vorbestimmten Landegebiets (12) in einem Radarsystem (S), und wobei das Herunterladen (106) der kartografischen Daten (16) an Bord des Flugzeugs (10) mittels eines verschlüsselten Telekommunikationskanals zwischen dem Radarsystem (S) und der Vorrichtung (14), die sich an Bord des Flugzeugs (10) befindet, erfolgt.

8. Verfahren zum Unterstützen des Piloten eines Flugzeugs (10) nach Ansprüchen 4 bis 6, umfassend einen vorausgehenden Schritt (102) der Speicherung der kartografischen Daten (16) des vorbestimmten Landegebiets (12) in einem Server (S) zur Speicherung am Boden.

9. Computerprogramm, das aus einem Kommunikationsnetz herunterladbar ist und/oder auf einem computerlesbaren Medium eingetragen ist und/oder durch einen Prozessor ausführbar ist, **dadurch gekennzeichnet, dass** es Anweisungen zum Ausführen der Schritte eines Verfahrens zum Unterstützen des Piloten eines Flugzeugs (10) nach einem der Ansprüche 4 bis 8 umfasst, wobei das Programm auf einem Computer (14) ausgeführt wird.

## Claims

1. Device for assisting with the piloting of an aircraft (10) during a landing phase, comprising:
- an interface (20) for downloading map data (16) of a predetermined landing site (12),
- at least one sensor (18) for additional description data of the predetermined landing site (12), said sensor (18) being arranged on the aircraft (10) so as to be able to obtain said additional description data upon an approach of the aircraft (10) to said predetermined site (12) with the aim of landing,
- a processor (14, 28) for algorithmically merging said map data (16) and said additional description data to produce enriched data of the predetermined landing site (12), and
- an element (32, 34, 36) which assists prior to the effective landing of the aircraft (10) by using said enriched data,
**characterized in that** at least one control (30) of the element (32, 34, 36) which assists prior to the effective landing of the aircraft is provided for selectively activating each of the following modes:
- a manual mode comprising displaying, on a control screen (32) of an instrument panel of the aircraft (10), an enhanced map of the predetermined landing site (12) using the enriched data,
- a semi-automatic mode comprising controlling (34) the adaptive suspension of a landing gear of the aircraft (10) using the enriched data, and
- an automatic mode comprising controlling (36) an auto-pilot module during the landing phase of the aircraft (10) using the enriched data.

2. Device for assisting with the piloting of an aircraft (10) according to claim 1, wherein the auto-pilot module (36) comprises an element for controlling the orientation of the wheels of the landing gear, said control element also using the enriched data.

3. Device for assisting with the piloting of an aircraft (10) according to either claim 1 or claim 2, wherein said at least one sensor (18) comprises at least one of the elements of the set consisting of an image sensor, a video sensor, an ultrasonic sensor and an infrared sensor.

4. Method for assisting with the piloting of an aircraft (10) during a landing phase, comprising the following steps:
- downloading (106), via a device (14) on board the aircraft (10) and via a first interface (20), map data (16) of a predetermined landing site (12) stored on a server (S),
- obtaining (110) additional description data of the predetermined landing site (12) by means of at least one sensor (18) arranged on the aircraft (10), upon an approach of the aircraft (10) to said predetermined site (12) with the aim of landing,
- algorithmically merging (114), via a processor (14, 28) of the on-board device (14), said map data (16) and said additional description data to produce enriched data of the predetermined landing site (12), and
- assisting (118, 120, 122) prior to the effective landing of the aircraft (10) by using said enriched data,
**characterized in that** the assisting prior to the effective landing comprises the selective activation of the following modes:
- a manual mode comprising displaying, on a control screen (32) of an instrument panel of the aircraft (10), an enhanced map of the predetermined landing site (12) using the enriched data,
- a semi-automatic mode comprising controlling (34) the adaptive suspension of a landing gear of the aircraft (10) using the enriched data, and
- an automatic mode comprising controlling (36) an auto-pilot module during the landing phase of the aircraft (10) using the enriched data.

5. Method for assisting with the piloting of an aircraft (10) according to claim 4, comprising a preliminary step (100) of capturing the map data (16) of the predetermined landing site (12) using a drone.

6. Method for assisting with the piloting of an aircraft (10) according to claim 4, comprising a preliminary step (100) of capturing the map data (16) of the predetermined landing site (12) using one of the elements of the set consisting of a helicopter, a reconnaissance airplane, a human operator, a dirigible balloon and a satellite.

7. Method for assisting with the piloting of an aircraft (10) according to any of claims 4 to 6, comprising a preliminary step (102) of storing the map data (16) of the predetermined landing site (12) on an airborne warning and control system (S), and wherein the downloading (106) of the map data (16) on board the aircraft (10) is performed via an encrypted telecommunications channel between the airborne warning and control system (S) and the device (14) on board the aircraft (10).

8. Method for assisting with the piloting of an aircraft (10) according to any of claims 4 to 6, comprising a preliminary step (102) of storing the map data (16) of the predetermined landing site (12) on a storage server (S) on the ground.

9. Computer program that can be downloaded from a communications network and/or is saved on a computer-readable medium and/or can be executed by a processor, **characterized in that** it comprises instructions for performing the steps of a method for assisting with the piloting of an aircraft (10) according to any of claims 4 to 8, when said program is executed on a computer (14).
